# EUROPEAN PATENT APPLICATION

(11) **EP 3 653 088 A1**
(43) Date of publication of application: **20.05.2020**
(21) Application number: 19208997.7
(22) Date of filing: 13.11.2019
(51) Int. Cl.: A47J 31/56, F24H 9/20, F24D 19/10

(54) **METHOD FOR MODULATED DELIVERY OF THE HEATING POWER TO A LIQUID, IN A LIQUID HEATER OF AN ESPRESSO MACHINE, AND A DEVICE FOR CARRYING OUT THE METHOD**

(30) Priority: 14.11.2018 IT 201800010334
(71) Applicant: Gruppo Cimbali S.p.A., 20082 Binasco (MI) (IT)
(72) Inventor: Rognoni, Paolo, 20082 Binasco MI (IT)
(74) Representative: Perani & Partners S.p.A.

(57) **Abstract**

The object of the present patent application is a method for controlling the delivery of heating power for dispensing coffee in an espresso machine by controlling electrical energy supply to a heating element of the heater that produces hot water, so that the delivery of heating power to the liquid stream will be distributed and modulated during the entire duty cycle of the heater, i.e. the time required to heat the fluid mass and keep it at the operating temperature during the steps of beverage dispensing in which a given amount of liquid at a lower temperature, replaces the one that is being dispensed at a higher temperature. The method of the invention affords considerable savings due to effective use of the thermal energy that is still present in the liquid stream that flows into the heater.

## Description

The present invention relates to a method of modulated delivery of heating power to a liquid in a liquid heater of an espresso machine, and to a device for carrying out the method.

Heating power is supplied by an electrically powered resistive or inductive heating element, which is placed inside the heater.

Espresso machines are known to largely use a heated liquid stream, namely water heated to a given temperature, which is delivered to the filters containing the dose of coffee grounds from which the beverage is brewed.

Since the delivery of the heated water flow depends on the frequency with which customers, e.g. of a point of sale, request the beverage, espresso machines are known to use devices for optimizing consumption of power supply to the water flow heaters based on to the thermal energy accumulated in the liquid that remains in the heater at the times when no beverage is dispensed, and based on the flow rates of the heated liquid that flows out of the heater and of the inflowing liquid, that depend on the frequency with which the beverage is requested and dispensed.

In the prior art, in view of reducing power consumption in heaters, in addition to the use of arrangements including the selection of suitable materials and possibly effective heat-insulation of ducts, heaters are equipped with systems in which periods of power supply alternate with periods of interruption of power supply, having different lengths and a predetermined ratio with each other and forming as a whole a duty cycle of predetermined duration, based on the particular user requirements.

Nevertheless, this known control technology is affected by the drawback that, during the period in which electrical energy is supplied to the heating element of the heater, heating power is supplied to its maximum value during that entire period of the duty cycle, which causes in most cases an unnecessary waste of energy despite the fact that, in the next period of the duty cycle, electrical energy, and hence heating power, is not supplied. The object of the present invention is to control electrical energy supply to the heating element of the heater, so that the delivery of heating power to the liquid stream of the heater will be distributed and modulated during the entire overall duty cycle, i.e. the time required to heat the fluid mass and keep it at the operating temperature during the steps of beverage dispensing in which a given amount of liquid at a lower temperature, replaces the one that is being dispensed at a higher temperature.

This and other objects, as better explained hereafter, are fulfilled by a method of supplying electrical energy to the heating element of a liquid heater which is characterized by claim 1 as set forth below.

The invention will be now described in greater detail with reference to one embodiment thereof, given by way of illustration and without limitation, and shown in the annexed drawings, in which:
- Figure 1 shows a block diagram of the structure of a first embodiment of the device for carrying out the method;
- Figure 2 shows a block diagram of the structure of a second embodiment of the device for carrying out the method;
- Figure 3 schematically shows an on/off diagram of the electric heating element, according to the inventive method, for modulated delivery of heating power throughout the entire duty cycle of a heater, whose duration is equal to a multiple of the period of an power supply voltage at 50 Hz.

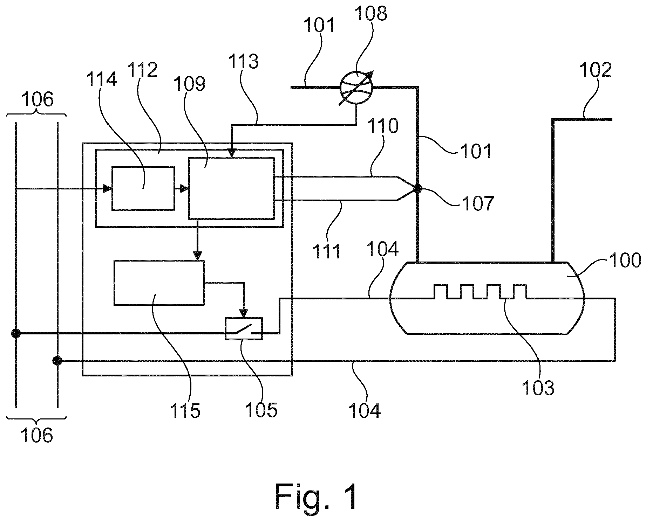

Referring to the above figures, and particularly to figure 1, numeral 100 designates a heater for liquids, namely water, to be used in conventional espresso preparing and dispensing machines.

The heater 100 has an inlet duct 101 and an outlet duct 102, as well as a heating element 103 located therein which may be of resistive type and hence take the form of a resistor having a nominal resistance R.

The heating element 103 is electrically powered via the connection 104 in which an on/off switch device 105 is provided.

In this example, electrical energy is supplied by a mains network, generally referenced 106 having an AC voltage V with a frequency *f*, for example 50 Hz, although DC voltages or AC voltages with different frequencies are not excluded.

The heater 100 may be of a conventional instantaneous type or of mixed type, associated with a conventional storage tank.

The inlet duct 101 is equipped with a temperature detector 107, as well as a flow meter 108 which is adapted to measure the flow rate of the liquid that flows into the heater 100 at a given time of the duration T of the overall duty cycle in which the liquid stream is to be heated, as described in further detail hereinafter.

The temperature detector 107 in the inlet duct 101 transfers the detected temperature values, Tem-in to a computing section 109, via the connections 110 and 111.

The computing section 109 form an integral part of an electronic control unit 112.

The flow meter 108 also transfers the flow rate value QTn detected at a given time, via the connection 113, to the computing section 109 of the same electronic control unit 112. During operation of the espresso machine, not shown, this unit is adapted to determine the thermal power PwTn that would be required to heat a flow rate QTn of the liquid to a predetermined output temperature, Tem-out that has been set in the circuit, for example, depending on the particular espresso recipe to be dispensed by the machine.

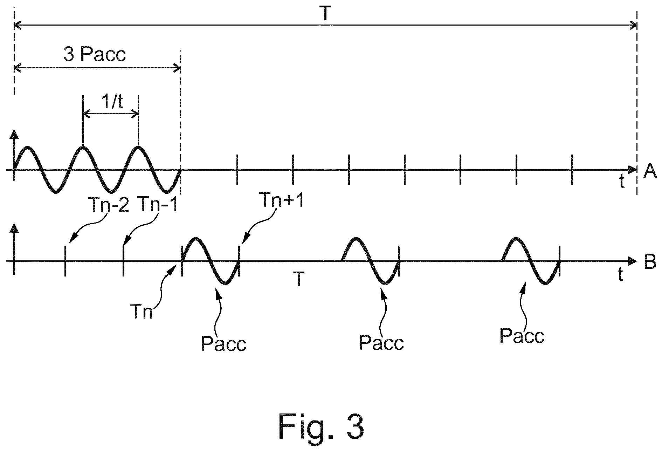

The calculation is made considering the specific heat, Cs, of the liquid, the temperature difference ΔTem, between the temperature Tem-in detected by detector 107 in the inlet duct 101, at the time Tn in which the flow entered the heater 100 and the fixed and preset temperature Tem-out that the liquid must have as it exits the heater, as well as, of course, the flow rate value QTn that has been detected by and received from the flow meter 108. According to the invention, and referring to the diagram B of Figure 3, the thermal energy required to heat the liquid (water) that flows into the heater 100, is delivered by switching on and off the heating element 103 in the form of energy packages Pacc, distributed throughout the duration T of the conventional duty cycle of the heater, thereby preventing concentration thereof in one part of this cycle, as shown in the diagram A of Figure 3 and indicated as 3Pacc.

The present invention assumes that the duration T of the overall duty cycle of the heater 100 corresponds to a multiple of the period *1*/*f* of the AC voltage of the mains network 106, with a frequency of 50 Hz, that is used to power the heating element 103.

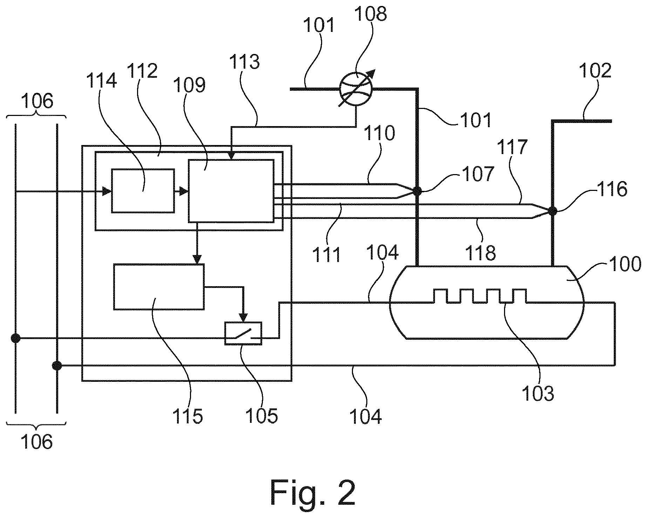

It is also assumed that the duration T of the said duty cycle is divided into a succession equally spaced times, referenced Tn-1, Tn, Tn+1, etc. in the diagram B of Figure 2 and that this succession of times, arranged along the time axis T of the duty cycle in which the heating power has to be supplied to the liquid stream, corresponds to the succession of zero crossings of the wave of the alternating voltage in use, at the beginning and the end of each period *1*/*f,* identified by means of a detector apparatus indicated in the block 114 of Figure 1.

Thermal energy distribution, as shown by the diagram B of Figure 2, is achieved as follows.

Once at least one Tem-out value has been set, for the target temperature of the liquid that flows out of the heater, according to the espresso recipe to be dispensed by the machine, and once the temperature Tem-in of the liquid that flows into the heater at a given time Tn has been detected by the temperature sensor 107, at a given time Tn, the difference ΔTem is determined between the fixed set temperature Tem-out and the temperature Tem-In.

At the same time time Tn, the flow rate value QTn of the liquid that flows into the heater is also detected by the flow meter 108 located in the duct 101.

The temperature and flow rate values are processed in the computing section 109 of the electronic control unit 112 to calculate the value of the heating power PwTn that would be required, using nominal resistance R of the heating element 103, to heat such flow rate QTn in the time interval between the time Tn, in which such flow rate Qtn has been detected, and the next time Tn+1 in said succession of times.

Once the value of such heating power PwTn has been determined, it is sent to a circuit element 115 in which it is compared with the value of the maximum power Pmax, that can be delivered by the heating element 103 of the heater 100 having the nominal resistance R and that is actually delivered, when the latter is on.

Now, if the value of the heating power PwTn of the flow rate QTn, as measured at said time Tn, or the summation of said value (PwTn) with the heating power values as measured at one or more preceding times (Tn-1, Tn-2n), exceeds the value of said maximum power Pmax that can be delivered by said heating element 103, the circuit element 115 actuates the on/off switch device 105 and supplies electrical energy to the resistor 103 which will deliver a heating power corresponding to the maximum allowed by its resistance R, and will only stay on until the next time Tn+1 in which it is switched off again.

The portion of the required thermal power PwTn that exceeded the maximum power Pmax, as a result of the resistor 103 being switched off at the time Tn +1 will remain available and sum up with the power that, at the same time Tn+1 would be required by the new flow rate QTn+1 to be heated by repeating the operation procedure determined at the time Tn via the electronic circuits 109, 112, 114 and 115.

In the method of the invention, the electrical energy supplied to the resistor 103, on which the heating power supplied to the liquid flowing through the heater 100 depends, is distributed throughout the duty cycle of the heater, which involves considerable energy savings due to effective use of the thermal energy that is still present in the liquid that flows into the heater as shown in the diagram B as Figure 3.

Referring to Figure 2, it will be noted that a different embodiment of the device for carrying out the method of the invention comprises a temperature sensor, referenced 116, placed on the outlet duct 102 of the heater 100.

This sensor 116 is intended to detect the actual temperature of the liquid as it flows out of the heater 100 as the beverage is being dispensed.

As the output liquid temperature values Tem-out are being detected by the sensor 116, they reach the electronic circuit indicated in the block 109 via the connection 117 and 118, where they may be processed for a variety of purposes.

One of these may be thermal efficiency control of the heating element 103, which as mentioned hereinabove, in case of resistive heating, is composed of a resistor with a nominal resistance R.

During the lifespan of the espresso machine in which it is installed, it may become deteriorated, for example due to limescale build-up thereon, which inevitably affects thermal efficiency, whereby the delivered heating power no longer corresponds to the value calculated according to its nominal resistance value R.

Any deviation of the actual outflowing liquid temperature, as measured by the sensor 116, from the preset output temperature Tem-out as used for calculating the thermal power to be supplied to the heater, may be used to correct the calculation values that have been set in the control unit 112, and to restore the original operating conditions that have been set, as mentioned above, by the conditions in which a particular espresso recipe is required to be dispensed.

A further purpose associated with the presence of the temperature sensor 116 on the outlet duct 102 of the heater, is to check the nominal resistance value R of the heating element 103, that has been used to set the calculation parameters to determine the required heating power, against the actual value of such resistance, in case of replacement for machine maintenance.

Another important purpose is the determination of an output temperature value Tem-out, to be used as a reference value when programming the control unit 112 for machine operation, through statistical detection of the actual temperatures in the liquid that flows out of the heater, occurring a s a result of a particular succession of types of beverages dispensed by the machine, at a given point of use, in a given interval of time.

Further changes to the embodiments as disclosed herein may be obviously envisaged, without departure from the scope of the following claims.

## Claims

1. A method for modulated delivery, during a predetermined time period, of a predetermined heating power (P) to a liquid stream in a liquid heater (100) of an espresso machine, said heating power (P) being delivered by supplying electrical energy to a heating element (103) of the heater, **characterized in that** it comprises the steps of:
- setting at least one predetermined temperature value (Tem-out) that the liquid stream is designed to exhibit when flowing out of the heater;
- detecting the temperature (Tem-in) of the liquid stream that flows into the heater;
- determining the difference (ΔTem) between the temperature (Tem-out) that has been set for the liquid stream that flows out of the heater and the temperature (Tem-in) of the incoming liquid stream;
- identifying a succession of equally spaced times (Tn) arranged along the time axis of said time period (T) during which said heating power (P) is to be delivered to the liquid stream;
- detecting the flow rate (QTn) of the liquid stream that flows into the heater at a given time (Tn) of said succession of equally spaced times;
- calculating the value of the heating power (PwTn) required to heat said flow rate (QTn) during the interval between the time (Tn) at which said flow rate (QTn) has been detected and the time that comes next (Tn+1) in said succession of times;
- comparing said power (PwTn) with the maximum power (Pmax) that can be delivered by said heating element (103) of the heater;
- supplying said electrical energy to said heating element (103), only if the value of the heating power (PwTn) for heating the flow rate (QTn) of the stream, as measured at said time (Tn), or the summation of said value (PwTn) and the heating power values as measured at one or more preceding times (Tn-1, Tn-2n), exceeds the value of said maximum power (Pmax) that can be delivered by said heating element (103) of the heater;
- stopping the supply of electrical energy to said heating element (103) at the time (Tn+1) that comes directly next the one at which such supply occurred;
- detecting once again the flow rate (QTn+1) at said time at which the supply of electrical energy to said heating element (103) has been stopped;
- calculating, at said time (Tn+1), the value of the heating power (PwTn+1) required to heat said flow rate (QTn+1) after subtracting the power (Pmax) that has been already delivered by said heating element (103) and adding the residual powers of the measurements made at the preceding times;
- supplying said electrical energy to said heating element (103), only if the value of the heating power (PwTn+1) for heating the flow rate (QTn+1) of the stream as measured at said time (Tn+1), exceeds again the value of said maximum power (Pmax) that can be delivered by said heating element (103) of the heater.

2. A method as claimed in claim 1, wherein said liquid is water.

3. A method as claimed in claims 1 and 2, **characterized in that** said heater (100) is an instantaneous heater.

4. A method as claimed in claims 1 to 3 **characterized in that** said heater (100) comprises a liquid storage reservoir.

5. A method as claimed in any of claims 1 to 4, wherein said heating element (103) is of resistive type.

6. A method as claimed in any of claims 1 to 4, wherein said heating element (103) is of inductive type.

7. A method as claimed in any of claims 1 to 6, **characterized in that** said electrical energy supplied to the heating element (103) of the heater, is an AC electrical energy and has a predetermined voltage value (V), and a predetermined frequency (*f*).

8. A method as claimed in claim 7, wherein the frequency (f) of the AC electrical energy is 50 Hz.

9. A method as claimed in any of claims 1 to 8, wherein said predetermined time period (T) is equal to a multiple of the characteristic period *1*/*f* of the AC electrical energy supplied to said heating element (103).

10. A method as claimed in any of claims 1 to 9, **characterized in that** said succession of equally spaced times (Tn) arranged along the time axis of said time period (T) during which said heating power (P) is to be delivered to the liquid stream that flows through said heating element (103), is composed of the zero crossing times, at the beginning and the end of the period, of the AC voltage wave of the electrical energy supplied to said heating element (103).

11. A device for carrying out the method as claimed in any of claims 1 to 10, **characterized in that** it comprises a heating element (103) that is housed in a heater (100), said heater (100) being equipped with an inlet (101) and an outlet (102) for the liquid stream, a temperature sensor (107) for sensing the temperature (Tem-in) of the liquid stream that flows into the heater (100), a flow meter (108) for detecting the flow rate (Qn) of the liquid stream that flows into the heater (100), at a predetermined time (Tn) of a succession of equally spaced times (Tn) arranged along the time axis of a cycle (T) during which the liquid is to be heated, a detector (114) for detecting the times of said succession of times, an electronic computing circuit (112), for determining the thermal power (PwTn) that would be required to heat said flow rate (QTn) of the liquid stream to a determined and preset output temperature (Tem-out), while accounting for the specific heat (Cs) of the liquid, for the temperature difference (ΔTem) between the temperature (Tem-in) that has been sensed by the sensor (107) located in the inlet conduit (101), at the time in which the stream flowed into the heater (100) and for the predetermined temperature value (Tem-out) that the liquid shall have as it flows out of the heater, as well as for the flow rate value (QTn) detected and received from said flow meter (108), a comparator (115) for comparing the maximum thermal power (Pmax) that can be delivered by the heating element (103) of the heater (100) and the thermal power (PwTn) required to heat said flow rate (Qn), as well as an on/off device (105) for turning on the power supply to said heating element (103), only if said thermal power (PwTn) required to heat said flow rate (Qn) of the liquid stream exceeds the value of said maximum power (Pmax) that can be delivered by said heating element (103) of the heater.

12. A device as claimed in claim 11, **characterized in that** it also comprises a temperature sensor (116) located in the outlet conduit (102) for the outflow of the liquid from said heater (100).
